# EUROPEAN PATENT APPLICATION

(11) **EP 4 209 452 A1**
(43) Date of publication of application: **12.07.2023**
(21) Application number: 21891828.2
(22) Date of filing: 08.11.2021
(51) Int. Cl.: C01B 3/26, B01D 53/94, F01N 3/10, B01J 23/46, B01J 23/63, B01J 23/83

(54) **EXHAUST GAS CLEANING CATALYST**

(30) Priority: 10.11.2020 JP 2020187482
(71) Applicant: CATALER CORPORATION, Kakegawa-shi, Shizuoka 437-1492 (JP)
(72) Inventor: TAKASU, Ryosuke, Kakegawa-shi, Shizuoka 437-1492 (JP); ONOE, Ryota, Kakegawa-shi, Shizuoka 437-1492 (JP); HIRAO, Tetsuhiro, Kakegawa-shi, Shizuoka 437-1492 (JP); TODA, Yosuke, Kakegawa-shi, Shizuoka 437-1492 (JP)
(74) Representative: Kramer Barske Schmidtchen Patentanwälte PartG mbB
(86) International application number: PCT/JP2021/041017
(87) International publication number: WO 2022/102582

(57) **Abstract**

An exhaust gas purifying catalyst 10 according to the present invention includes a base material 11, a reforming reaction layer 20 provided on the base material 11 and including at least one of a rare earth oxide and a transition metal oxide (except precious metal other than Rh and Ru) as a hydrogen generation catalyst that converts an unbumt component in exhaust gas into H₂, and a catalyst layer 30 including precious metal that purifies the unbumt component. The content of the hydrogen generation catalyst in the reforming reaction layer 20 is 5 g/L or more per unit volume of the base material 11.

## Description

### [Technical Field]

The present invention relates to an exhaust gas purifying catalyst. Specifically, the present invention relates to an exhaust gas purifying catalyst that purifies exhaust gas including nitrogen oxide (NOx). The present application claims priority based on Japanese Patent Application No. 2020-187482 filed on November 10, 2020, the entire contents of which application are incorporated herein by reference.

### [Background Art]

The exhaust gas emitted from an internal-combustion engine of a vehicle or the like includes unbumt components (toxic substances) such as hydrocarbon (HC), carbon monoxide (CO), and nitrogen oxide (NOx). For efficient reaction and removal of these unbumt components from the exhaust gas, exhaust gas purifying catalysts have been used conventionally. A typical exhaust gas purifying catalyst includes a catalyst layer containing precious metal such as Pt (platinum), Pd (palladium), or Rh (rhodium). NOx included in the exhaust gas is reduced by the catalyst layer and converted into nitrogen. Patent Literatures 1 to 4 are cited as the conventional technical literatures related to the exhaust gas purifying catalysts.

### [Citation List]

### [Patent Literatures]

[Patent Literature 1] Japanese Patent Application Publication No. 2002-282697
[Patent Literature 2] Japanese Patent Application Publication No. 2005-185966
[Patent Literature 3] Japanese Patent Application Publication No. 2011-183319
[Patent Literature 4] WO 2020/128786

### [Summary of Invention]

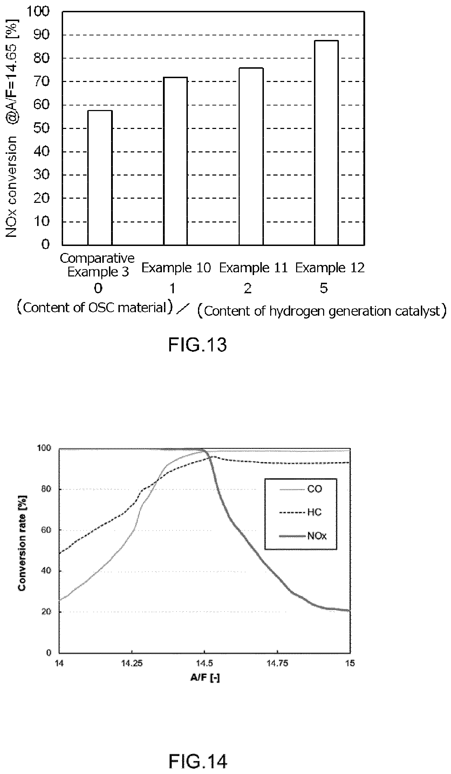

Incidentally, in recent years, even if the control over the air-fuel ratio (A/F) of the exhaust gas varies to some extent from a stoichiometric state (A/F = 14.5) by sudden acceleration or deceleration of the vehicle, for example, it is required to purify the exhaust gas properly as represented by Real Driving Emission (RDE) regulation in Europe. According to examinations by the present inventors, however, as shown in Fig. 14, the precious metal cannot exert the sufficient NOx purification performance and the NOx purification rate is low in a lean atmosphere (14.5 < A/F) where oxygen is excessive in the air-fuel ratio of the exhaust gas. Thus, even in the lean atmosphere, the NOx purification performance is desired to be improved.

The present invention has been made in view of the above circumstances, and it is an object of the present invention to provide a novel exhaust gas purifying catalyst in which NOx purification performance in a lean atmosphere is improved.

### [Solution to Problem]

According to the present inventors' examination, precious metal in a catalyst layer is normally in an oxide state in the lean atmosphere. However, the precious metal is less active in the oxide state and cannot sufficiently exert its function of purifying exhaust gas. Thus, the present inventors have considered improving the oxidation reaction speed of unbumt components in the exhaust gas by reducing and rapidly metalizing the precious metal by using hydrogen known as a strong reducing agent. Then, the present inventors have made further examinations, and created the present invention.

According to the present invention, an exhaust gas purifying catalyst that is disposed in an exhaust path of an internal-combustion engine and purifies an unbumt component in exhaust gas emitted from the internal-combustion engine is provided. This exhaust gas purifying catalyst includes a base material, a reforming reaction layer provided on the base material and including at least one of a rare earth oxide and a transition metal oxide (except precious metal other than Rh and Ru) as a hydrogen generation catalyst that converts the unbumt component in the exhaust gas into H₂, and a catalyst layer including precious metal that purifies the unbumt component. A content of the hydrogen generation catalyst in the reforming reaction layer is 5 g/L or more per unit volume of the base material.

The exhaust gas purifying catalyst includes the reforming reaction layer including the hydrogen generation catalyst. In the reforming reaction layer, the unbumt component (for example, HC or CO) in the exhaust gas can be converted into hydrogen molecules (H₂) with the high reactivity. Moreover, the precious metal can be reduced by H₂ from an oxide state to a metal state with the high activity. Furthermore, since the reforming reaction layer does not include the precious metal other than Rh and Ru, the conflict with an exhaust gas purification reaction by an oxidation reaction can be avoided and a conversion reaction to Hz can be promoted. As a result, in the exhaust gas purifying catalyst, the oxidation reaction speed of the exhaust gas can be increased and the NOx purification performance in a lean atmosphere can be improved. Thus, for example, when the air-fuel ratio of the exhaust gas varies to some extent depending on a driving condition of a vehicle or the like, the excellent NOx purification performance can be exerted stably.

In a preferred aspect of the exhaust gas purifying catalyst disclosed herein, the reforming reaction layer further includes an OSC material with an oxygen storage capacity. By the combined effect of the hydrogen generation catalyst and the OSC material, the conversion of the unbumt component in the reforming reaction layer to Hz can be promoted. Thus, the NOx purification performance can be further improved.

In a preferred aspect of the exhaust gas purifying catalyst disclosed herein, in the reforming reaction layer, a ratio of a content of the OSC material to the content of the hydrogen generation catalyst is 0.5 to 10. Thus, the conversion of the unbumt component to Hz can be promoted more properly and by suppressing the coat quantity of the reforming reaction layer, the pressure loss and the cost can be reduced.

In a preferred aspect of the exhaust gas purifying catalyst disclosed herein, the content of the hydrogen generation catalyst is 20 g/L or less. Thus, both the NOx purification performance in the lean atmosphere and the excellent low-temperature activity can be achieved.

In a preferred aspect of the exhaust gas purifying catalyst disclosed herein, the hydrogen generation catalyst includes at least one of Pr, Nd, Co, and Ni. Thus, the effect of the art disclosed herein can be exerted at a high level.

In a preferred aspect of the exhaust gas purifying catalyst disclosed herein, the reforming reaction layer does not include the precious metal. Thus, by reducing the usage of the precious metal whose price is increasing, the cost can be reduced.

In a preferred aspect of the exhaust gas purifying catalyst disclosed herein, the catalyst layer is provided on the reforming reaction layer. Thus, it is possible to suppress the emission, from the exhaust gas purifying catalyst, of the material that is excessively reduced by H₂ generated in the reforming reaction layer (for example, ammonia generated by reducing NOx), without reoxidation. Moreover, since the exhaust gas can be brought into contact with the catalyst layer earlier than the reforming reaction layer, the durability of the reforming reaction layer can be improved.

In a preferred aspect of the exhaust gas purifying catalyst disclosed herein, the catalyst layer includes a first catalyst layer that includes an oxidation catalyst as the precious metal, and a second catalyst layer that is provided on the first catalyst layer and includes Rh as the precious metal. By this structure, at least one of the following effects can be achieved: (1) the effect of the art disclosed herein is exerted in a long term by suppressing the deterioration of the hydrogen generation catalyst and suppressing the oxidation of Rh in the use of the hydrogen generation catalyst; and (2) by using Hz generated by the hydrogen generation catalyst, NOx is reduced and purified into N₂ and H₂O and the precious metal in the oxide state is metalized.

### [Brief Description of Drawings]

Fig. 1 is a schematic diagram showing an exhaust gas purifying system according to an embodiment.
Fig. 2 is a perspective diagram schematically showing an exhaust gas purifying catalyst in Fig. 1.
Fig. 3 is a cross-sectional view in which the exhaust gas purifying catalyst in Fig. 2 is cut along a cylinder axis direction.
Fig. 4 is a graph showing a relation between an air-fuel ratio (A/F) and a NOx purification rate in Test Example 1.
Fig. 5 is a graph showing a comparison of the NOx purification rates in a lean atmosphere in Test Example 1.
Fig. 6 is a graph showing a relation between the air-fuel ratio (A/F) and the NOx purification rate in Test Example 2.
Fig. 7 is a graph showing a comparison of the NOx purification rates in the lean atmosphere in Test Example 2.
Fig. 8 is a graph showing a relation between the air-fuel ratio (A/F) and the NOx purification rate in Test Example 3.
Fig. 9 is a graph showing a relation between the content of nickel oxide and the A/F of NOx T50 in Test Example 3.
Fig. 10 is a graph showing a comparison of Example 4 in Test Example 2 and Example 6 in Test Example 3.
Fig. 11 is a graph showing a relation between the content of the nickel oxide and NOx T50 in Test Example 3.
Fig. 12 is a graph showing a relation between the air-fuel ratio (A/F) and the NOx purification rate in Test Example 4.
Fig. 13 is a graph showing a comparison of the NOx purification rates in the lean atmosphere in Test Example 4.
Fig. 14 is a graph showing a relation between the air-fuel ratio (A/F) and the purification ratio of unbumt components (CO, HC, NOx).
Fig. 15 is a graph showing a comparison of the NOx purification rates at an air-fuel ratio (A/F) of 14.6 in Test Example 3.

### [Description of Embodiments]

Preferred embodiments of the present invention will be described below with reference to the drawings. Incidentally, matters other than matters particularly mentioned in the present specification and necessary for the implementation of the present invention can be grasped as design matters of those skilled in the art based on the prior art in the relevant field. The present invention can be carried out based on the contents disclosed in this specification and technical common sense in the field. In the drawings below, the members and parts with the same operation are denoted with the same reference symbols and the overlapping description may be omitted or simplified. The size (length, width, thickness, and the like) in each drawing does not always reflect the actual size. In the present specification, the notation "A to B" (A and B are arbitrary numerals) for a range signifies a value more than or equal to A and less than or equal to B, and also encompasses the meaning of being "preferably more than A" and "preferably less than B".

### «Exhaust gas purifying system»

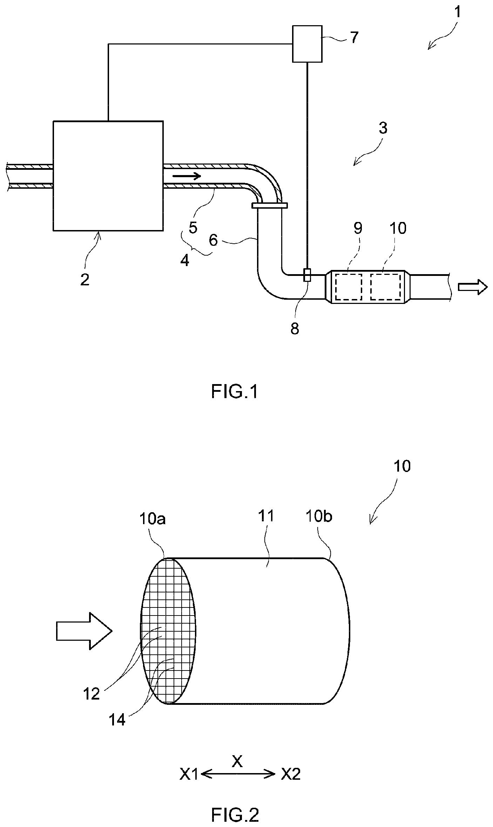

Fig. 1 is a schematic diagram of an exhaust gas purifying system 1. The exhaust gas purifying system 1 includes an internal-combustion engine (engine) 2, an exhaust gas purifying device 3, and an engine control unit (ECU) 7. The exhaust gas purifying system 1 is configured to purify an unbumt component in the exhaust gas emitted from the internal-combustion engine 2, such as HC, CO, or NOx, in the exhaust gas purifying device 3. Note that an arrow in Fig. 1 indicates a flowing direction of the exhaust gas. In the description below, along the flow of the exhaust gas, the side closer to the internal-combustion engine 2 is referred to as an upstream side and the side farther from the internal-combustion engine 2 is referred to as a downstream side.

The internal-combustion engine 2 is configured here using a gasoline engine of a gasoline vehicle as a main body. The internal-combustion engine 2 may alternatively be an engine other than the gasoline engine, for example, a diesel engine, an engine mounted on a hybrid vehicle, or the like. The internal-combustion engine 2 includes a combustion chamber (not shown). The combustion chamber is connected to a fuel tank (not shown). The fuel tank stores gasoline here. The fuel to be stored in the fuel tank may alternatively be diesel fuel (light oil) or the like. In the combustion chamber, the fuel supplied from the fuel tank is mixed with oxygen and combusted. Thus, combustion energy is converted into mechanical energy. The combustion chamber communicates with an exhaust port 2a. The exhaust port 2a communicates with the exhaust gas purifying device 3. The combusted fuel gas turns into exhaust gas, which is then emitted to the exhaust gas purifying device 3. The exhaust gas includes the unbumt component (toxic substances).

The exhaust gas purifying device 3 includes an exhaust path 4 that communicates with the internal-combustion engine 2, an oxygen sensor 8, a first catalyst 10, and a second catalyst 9. The exhaust path 4 is an exhaust gas flow channel where the exhaust gas flows. The exhaust path 4 includes an exhaust manifold 5 and an exhaust pipe 6 here. An upstream end part of the exhaust manifold 5 is connected to the exhaust port 2a of the internal-combustion engine 2. A downstream end part of the exhaust manifold 5 is connected to the exhaust pipe 6. In the middle of the exhaust pipe 6, the first catalyst 10 and the second catalyst 9 are disposed in this order from the upstream side. However, the disposition of the first catalyst 10 and the second catalyst 9 may be arbitrarily changed. Moreover, the number of first catalysts 10 and the number of second catalysts 9 are not limited in particular and each of them may be more than one. Furthermore, the second catalyst 9 is not always necessary and can be omitted in another embodiment.

The first catalyst 10 is, here, a catalyst that is brought into contact with the exhaust gas firstly. Although the details will be described below, the first catalyst 10 has functions of generating H₂ and purifying the unbumt component in the exhaust gas. The first catalyst 10 is one example of "exhaust gas purifying catalyst" disclosed herein. Note that the first catalyst 10 may be referred to as "exhaust gas purifying catalyst" below. The structure of the first catalyst (exhaust gas purifying catalyst) 10 will be described in detail below. The second catalyst 9 may be similar to the conventional one, and is not limited in particular. For example, the second catalyst 9 may be a three-way catalyst that purifies HC, CO, and NOx in the exhaust gas at the same time, a gasoline particulate filter (GPF) that removes PM in the exhaust gas, or the like.

Note that on the upstream side of the first catalyst 10, a catalyst whose structure is different from those of the first catalyst 10 and the second catalyst 9 may be further disposed. Examples thereof include a diesel particulate filter (DPF) that removes PM in the exhaust gas, a diesel oxidation catalyst (DOC) that purifies HC or CO in the exhaust gas, and a NOx storage-reduction (NSR) catalyst that stores NOx in the normal driving (in a lean condition) and purifies NOx using HC or CO as a reducing agent when more fuel is injected (in a rich atmosphere).

The ECU 7 controls the internal-combustion engine 2 and the exhaust gas purifying device 3. The ECU 7 is electrically connected to the internal-combustion engine 2 and a sensor (for example, the oxygen sensor 8, and a temperature sensor and a pressure sensor that are not shown) disposed at each part of the exhaust gas purifying device 3. Note that the structure of the ECU 7 may be similar to the conventional structure without particular limitations. The ECU 7 is, for example, a processor or an integrated circuit. The ECU 7 includes an input port (not shown) and an output port (not shown). The ECU 7 receives, for example, information about the operation state of the vehicle and the amount, the temperature, the pressure, and the like of the exhaust gas emitted from the internal-combustion engine 2. The ECU 7 receives information detected by the sensor (for example, the amount of oxygen measured by the oxygen sensor 8) through the input port. The ECU 7 transmits a control signal through the output port on the basis of the received information, for example. The ECU 7 controls the operation, for example, controls the fuel injection or ignition of the internal-combustion engine 2 and controls to regulate the amount of intake air. The ECU 7 controls the operation of the internal-combustion engine 2 so that the air-fuel ratio (A/F) of the exhaust gas is in a stoichiometric state, for example. The ECU 7 controls the driving and stopping of the exhaust gas purifying device 3 on the basis of the operation state of the internal-combustion engine 2 and the amount of the exhaust gas emitted from the internal-combustion engine 2, for example.

### «Exhaust gas purifying catalyst»

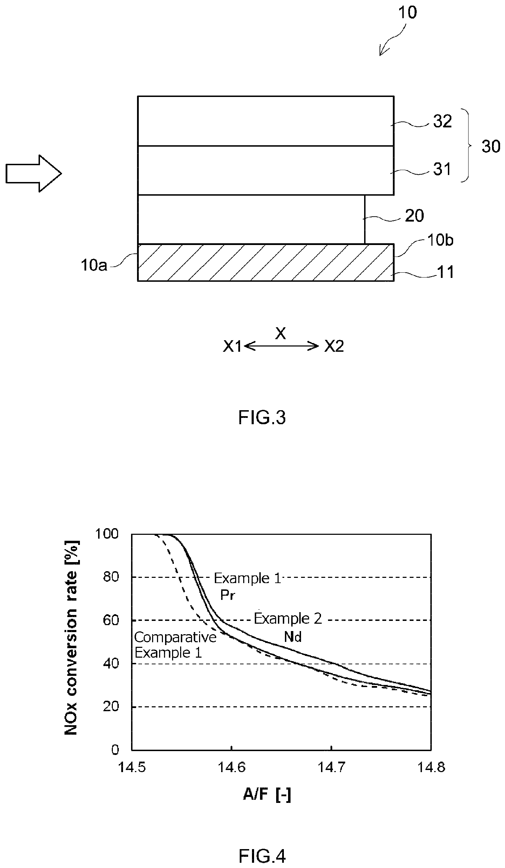

Fig. 2 is a perspective diagram schematically showing the exhaust gas purifying catalyst 10. Fig. 3 is a cross-sectional view schematically showing a cross section of the exhaust gas purifying catalyst 10 taken along a cylinder axis direction X. Note that arrows in Fig. 2 and Fig. 3 indicate the flowing direction of the exhaust gas. In Fig. 2 and Fig. 3, the upstream side of the exhaust path 4, which is relatively close to the internal-combustion engine 2, is expressed on the left side and the downstream side of the exhaust path 4, which is relatively far from the internal-combustion engine 2, is expressed on the right side. Moreover, reference symbol X denotes a cylinder axis direction of the exhaust gas purifying catalyst 10. The exhaust gas purifying catalyst 10 is disposed in the exhaust path 4 so that the cylinder axis direction X extends along the flowing direction of the exhaust gas. In the description below, in the cylinder axis direction X, one direction X1 may be referred to as the upstream side (also referred to as exhaust gas inflow side or front side) and the other direction X2 may be referred to as the downstream side (also referred to as exhaust gas outflow side or rear side). However, these are merely the directions for the convenience of description and will not limit the mode of installing the exhaust gas purifying catalyst 10. In the present specification, "content" refers to mass per unit volume (1 L) of a base material.

The exhaust gas purifying catalyst 10 has the functions of generating Hz and purifying the unbumt component in the exhaust gas. An end part of the exhaust gas purifying catalyst 10 in the one direction X1 corresponds to an exhaust gas inlet 10a and an end part thereof in the other direction X2 corresponds to an exhaust gas outlet 10b. The outer shape of the exhaust gas purifying catalyst 10 is a cylindrical shape here. However, the outer shape of the exhaust gas purifying catalyst 10 is not limited in particular and may be, for example, an elliptical cylindrical shape, a polygonal cylindrical shape, a pipe-like shape, a foam-like shape, a pellet shape, a fibrous shape, or the like. The exhaust gas purifying catalyst 10 includes a base material 11 with a straight flow structure, a reforming reaction layer 20 (see Fig. 3), and a catalyst layer 30 (see Fig. 3).

The base material 11 forms the frame of the exhaust gas purifying catalyst 10. The base material 11 is not particularly limited and various materials and various modes that have conventionally been employed in this type of applications can be used. The base material 11 may be, for example, a ceramic carrier formed of ceramic such as cordierite, aluminum titanate, or silicon carbide, or a metal carrier formed of stainless steel (SUS), Fe-Cr-Al-based alloy, Ni-Cr-Al-based alloy, or the like. As shown in Fig. 2, the base material 11 has a honeycomb structure here. The base material 11 includes a plurality of cells (cavities) 12 arrayed regularly in the cylinder axis direction X, and partition walls (ribs) 14 that section the cells 12. Although not particularly limited, a length (average length) L of the base material 11 along the cylinder axis direction X may be generally 10 to 500 mm, for example 50 to 300 mm. The volume of the base material 11 may be generally 0.1 to 10 L, for example 0.5 to 5 L. In the present specification, "the volume of the base material" refers to the apparent volume (bulk capacity) including the capacity of the cells 12 on the inside in addition to the volume (pure volume) of the base material 11 itself.

The cell 12 serves as a flow channel for the exhaust gas. The cell 12 extends in the cylinder axis direction X. The cell 12 is a penetration hole penetrating the base material 11 in the cylinder axis direction X. The shape, the size, the number, and the like of the cells 12 may be designed in consideration of, for example, the flow rate, the component, and the like of the exhaust gas flowing in the exhaust gas purifying catalyst 10. The shape of the cross section of the cell 12 that is orthogonal to the cylinder axis direction X is not limited in particular. The cross-sectional shape of the cell 12 may be, for example, a tetragon such as a square, a parallelogram, a rectangle, or a trapezoid, another polygon (such as a triangle, a hexagon, or an octagon), a wavy shape, a circular shape, or various other geometric shapes. The partition wall 14 faces the cell 12 and sections between the adjacent cells 12.

The reforming reaction layer 20 is a reaction field where the unbumt component in the exhaust gas is converted into Hz. As shown in Fig. 3, the reforming reaction layer 20 is provided between the base material 11 and the catalyst layer 30 here, in a thickness direction that is orthogonal to the cylinder axis direction X. Specifically, the reforming reaction layer 20 is provided on the base material 11, in detail, on a surface of the partition wall 14. Thus, it is possible to suppress the emission, from the exhaust gas purifying catalyst 10, of the material that is excessively reduced by Hz (for example, ammonia generated by reducing NOx), without reoxidation. Moreover, since the exhaust gas can be brought into contact with the catalyst layer 30 earlier than the reforming reaction layer 20, the active point of a hydrogen generation catalyst to be described below does not deteriorate easily by caulking or the like, and thus, the durability of the reforming reaction layer 20 can be improved.

The reforming reaction layer 20 is provided from the exhaust gas inlet 10a toward the downstream side along the cylinder axis direction X here. In another embodiment, however, the reforming reaction layer 20 may be provided from the exhaust gas outlet 10b toward the upstream side along the cylinder axis direction X. The reforming reaction layer 20 may be provided either continuously or intermittently on the base material 11. A total coat length (average length) L1 of the reforming reaction layer 20 in the cylinder axis direction X may be designed in consideration of, for example, the size of the base material 11, the flow rate of the exhaust gas flowing in the exhaust gas purifying catalyst 10, and the like. In some aspects, when the total length of the exhaust gas purifying catalyst 10 in the cylinder axis direction X is L, the coat length L1 of the reforming reaction layer 20 in the cylinder axis direction X satisfies 0.3L ≤ L1 < L, and preferably 0.5L ≤ L1 ≤ 0.8L. Thus, the reforming reaction layer 20 is used efficiently, so that the effect of the art disclosed herein can be exerted at a higher level. The total coat thickness of the reforming reaction layer 20 (average length in the thickness direction orthogonal to the cylinder axis direction X) may be generally 1 to 100 µm, and for example, about 5 to 100 µm from the viewpoints of the durability, the peeling resistance, and the like.

The reforming reaction layer 20 includes the hydrogen generation catalyst necessarily. The reforming reaction layer 20 here additionally includes an inorganic oxide other than the hydrogen generation catalyst. Specifically, the reforming reaction layer 20 includes an oxygen storage capacity (OSC) material with the oxygen storage capacity and a non-OSC material without the oxygen storage capacity. However, the inorganic oxide (OSC material and/or non-OSC material) other than the hydrogen generation catalyst is not always necessary, and can be omitted in another embodiment. The reforming reaction layer 20 here does not include precious metal other than Rh and Ru. Thus, the conflict with an exhaust gas purification reaction by an oxidation reaction can be avoided and a hydrogen generation reaction can be promoted suitably. The reforming reaction layer 20 may include Rh and/or Ru with high hydrogen generation reactivity.

The hydrogen generation catalyst is a catalyst that causes the hydrogen generation reaction where the unbumt component in the exhaust gas is converted into Hz. More specifically, this catalyst converts HC, CO, or the like into Hz by a steam reforming reaction (HC + H₂O → CO₂ + H₂) and/or a CO shift reaction (CO + H₂O → CO₂ + H₂). The hydrogen generation catalyst may alternatively be a catalyst that metalizes the precious metal in an oxide state. Note that the hydrogen generation catalyst may be included along the cylinder axis direction X uniformly, and for example, may alternatively be included so that the content changes gradually from the upstream side toward the downstream side. For example, the hydrogen generation catalyst may be included so that the content decreases gradually from the upstream side toward the downstream side.

The hydrogen generation catalyst has a particle shape. The hydrogen generation catalyst here is mixed with the OSC material and the non-OSC material in the reforming reaction layer 20. The hydrogen generation catalyst is not carried by the OSC material or the non-OSC material, for example, and is independent from the OSC material and the non-OSC material. Thus, by increasing the heat resistance of the hydrogen generation catalyst, the hydrogen generation reaction (the steam reforming reaction and/or the CO shift reaction) can be caused favorably. Moreover, by increasing the dispersibility of the hydrogen generation catalyst, sintering can be suppressed. The average particle diameter of the hydrogen generation catalyst (based on the number by observation using an electron microscope) is preferably smaller than the average particle diameter of the OSC material and/or the non-OSC material. Thus, difficulty in the reduction can be prevented and stable activity can be maintained.

In the art disclosed herein, the hydrogen generation catalyst includes at least one of a rare earth oxide and a transition metal oxide (except precious metal other than Rh and Ru). Thus, the conflict with the exhaust gas purification reaction by the oxidation reaction can be avoided and the hydrogen generation reaction can be promoted. The hydrogen generation catalyst may include Rh and/or Ru with the high hydrogen generation reactivity, and may not include Rh and/or Ru. For example, the hydrogen generation catalyst may include at least one of the rare earth oxide and the transition metal oxide (except precious metal) as a first hydrogen generation catalyst, and may further include Rh and/or Ru as a second hydrogen generation catalyst.

Examples of the rare earth oxide include oxides of scandium (Sc), yttrium (Y), lanthanum (La), cerium (Ce), praseodymium (Pr), neodymium (Nd), promethium (Pm), samarium (Sm), europium (Eu), gadolinium (Gd), terbium (Tb), dysprosium (Dy), holmium (Ho), erbium (Er), thulium (Tm), ytterbium (Yb), and lutetium (Lu), which belong to Group 3 in the periodic table. Specifically, because the reactivity is high and the hydrogen generation performance is excellent, oxides of lanthanoids are preferable, and at least one of Pr and Nd is preferable from the viewpoints of the durability, the availability, and the like.

Examples of the transition metal oxide (except precious metal other than Rh and Ru) include oxides of scandium (Sc), titanium (Ti), vanadium (V), chromium (Cr), manganese (Mn), iron (Fe), cobalt (Co), nickel (Ni), and copper (Cu), which belong to Period 4 in the periodic table, and oxides of yttrium (Y), zirconium (Zr), niobium (Nb), molybdenum (Mo), and technetium (Tc), which belong to Period 5 in the periodic table. Specifically, because the reactivity is high and the hydrogen generation performance is excellent, oxides of metals in Period 4 in the periodic table are preferable, oxides of the iron group (Fe, Co, and Ni) are more preferable, and Ni is particularly preferable. From the viewpoints of the durability and the like, at least one of Co and Ni is preferable.

In the present embodiment, the content of the hydrogen generation catalyst in the reforming reaction layer 20 is 5 g/L or more per liter of the volume of the base material on the oxide basis. Thus, the effect of the art disclosed herein is sufficiently exerted and the unbumt component (for example, HC or CO) in the exhaust gas can be quickly converted into Hz with the high reactivity. In some aspects, the content of the hydrogen generation catalyst may be 10 g/L or more per liter of the volume of the base material.

From the viewpoint of suppressing the excessive reduction of the unbumt component (for example, NOx is excessively reduced and ammonia is generated), the content of the hydrogen generation catalyst may be generally 100 g/L or less, preferably 80 g/L or less, and for example, 50 g/L or less per liter of the volume of the base material. Moreover, from the viewpoint of achieving both the NOx purification performance in a lean atmosphere and excellent low-temperature activity (for example, warm-up performance or heat-retaining performance), the content of the hydrogen generation catalyst is preferably 30 g/L or less and particularly preferably 20 g/L or less per liter of the volume of the base material.

In some aspects, if the hydrogen generation catalyst includes the rare earth oxide and the transition metal oxide (except precious metal) as the first hydrogen generation catalyst and Rh and/or Ru as the second hydrogen generation catalyst, the content of the second hydrogen generation catalyst is typically less than that of the first hydrogen generation catalyst. The content of the second hydrogen generation catalyst is generally 0.1 to 50%, for example 1 to 30%, and preferably 2 to 20% of the content of the first hydrogen generation catalyst.

In the art disclosed herein, the OSC material has a function of promoting the hydrogen generation reaction (the steam reforming reaction and/or the CO shift reaction). The OSC material may function as a promoter. More specifically, in the reforming reaction layer 20, the OSC material is disposed close to the hydrogen generation catalyst. Although interpretation is not limited in particular, according to presumptions by the present inventors, the OSC material has functions of dissociating H₂O in the exhaust gas and supplying the hydrogen generation catalyst with oxygen atoms. Thus, it is assumed that the hydrogen generation reaction can be promoted. It has been conventionally known that the OSC material has a function as an absorber that stores oxygen in the lean atmosphere. By the combined effect, including the OSC material can remarkably stabilize the purification performance even when the air-fuel ratio of the exhaust gas changes from the stoichiometric state. For example, at least one of (preferably both) the NOx purification performance and the HC purification performance can be improved.

Examples of the OSC material include a metal oxide that contains ceria (CeOz) with the high oxygen storage capacity (Ce-containing oxide). The Ce-containing oxide may be ceria or a complex oxide containing ceria and the metal oxide other than ceria. From the viewpoints of improving the heat resistance and the durability, and the like, the Ce-containing oxide may be a complex oxide containing at least one of Zr and Al, for example, a ceria (CeOz)-zirconia (ZrO₂) complex oxide (CZ complex oxide). From the viewpoints of improving the heat resistance and the like, the CZ complex oxide may further include a rare earth metal oxide such as Nd₂O₃, La₂O₃, Y₂O₃, or Pr₆O₁₀. The CZ complex oxide may be either Ce-rich or Zr-rich. In some aspects, the mixing ratio of ceria may be generally 10 to 90 mass%, for example, 15 to 70 mass% when the entire CZ complex oxide is 100 mass%. When the mixing ratio of ceria is more than or equal to a predetermined value, the conversion of the unbumt component into Hz can be promoted. When the mixing ratio of ceria is less than or equal to a predetermined value, the heat resistance can be improved. In the above range, both the effect of the art disclosed herein and the heat resistance can be achieved at a high level.

Although not particularly limited, the content of the OSC material in the reforming reaction layer 20 may be generally 1 to 100 g/L, for example, 5 to 50 g/L per liter of the volume of the base material. In some aspects, the ratio (C2/C1) of the content of the OSC material to the content of the hydrogen generation catalyst may be generally 0.1 or more, 0.2 or more, preferably 0.5 or more, for example 1 or more, 2 or more, and 3 or more, and generally 30 or less, 20 or less, preferably 10 or less, and for example 5 or less. Thus, the hydrogen generation reaction can be promoted and by suppressing the coat quantity of the reforming reaction layer 20, the pressure loss and the cost can be reduced.

The non-OSC material has at least one of a function of improving the heat resistance of the reforming reaction layer 20, a function of improving the durability of the reforming reaction layer 20, and a function of suppressing peeling of the reforming reaction layer 20 from the base material 11. Examples of the non-OSC material include rare earth metal oxides such as alumina (Al₂O₃), titania (TiOz), zirconia (ZrO₂), and silica (SiOz). Especially, the metal oxide containing alumina (Al-containing oxide) with high heat resistance and durability is preferable. The Al-containing oxide may be alumina or a complex oxide containing alumina and the metal oxide (for example, rare earth metal oxide) other than alumina. From the viewpoints of improving the heat resistance and the durability, and the like, the Al-containing oxide may be an La₂O₃-Al₂O₃ complex oxide (LA complex oxide), for example. The LA complex oxide may be either La-rich or Al-rich. In some aspects, from the viewpoints of suppressing deterioration in long-term use and the like, the mixing ratio of the metal oxide other than alumina may be generally less than 50 mass%, for example, 0.1 to 20 mass% when the entire LA complex oxide is 100 mass%.

Although not particularly limited, the content of the non-OSC material in the reforming reaction layer 20 may be less than the content of the OSC material. The content of the non-OSC material may be generally 1 to 100 g/L, for example 5 to 50 g/L per liter of the volume of the base material.

The hydrogen generation catalyst, the OSC material, or the non-OSC material may constitute a main part (component that occupies 50 mass% or more of the whole) of the reforming reaction layer 20. From the viewpoints of suppressing the sintering by increasing the dispersibility of the hydrogen generation catalyst, and the like, the main part of the reforming reaction layer 20 may be the OSC material and/or the non-OSC material (if both the OSC material and the non-OSC material are included, the main part may be the total of them). Although not particularly limited, from the viewpoints of suitably exerting the effect of the art disclosed herein in a long term and the like, the content ratio of the hydrogen generation catalyst may be generally 5 to 90 mass%, and preferably 10 to 70 mass% when the entire reforming reaction layer 20 is 100 mass%. Moreover, from the viewpoints of promoting the hydrogen generation reaction and the like, the content ratio of the OSC material may be generally 1 to 70 mass%, and preferably 5 to 65 mass%. Furthermore, from the viewpoints of improving the heat resistance, the durability, and the peeling resistance, and the like, the content ratio of the non-OSC material may be generally 10 mass% or more, preferably 25 mass% or more, and for example, 30 to 50 mass%.

The reforming reaction layer 20 may be formed by the hydrogen generation catalyst, the OSC material, and the non-OSC material, and further include an optional component. For example, if the reforming reaction layer 20 includes the OSC material, the reforming reaction layer 20 may include an alkaline-earth element such as calcium (Ca), barium (Ba), or strontium (Sr). Thus, in the lean atmosphere, the oxygen storage amount to the OSC material can be increased. Moreover, being poisoned in the rich atmosphere is suppressed, and the stable activity of the hydrogen generation catalyst can be maintained.

In some aspects, the coat quantity (molding quantity) of the reforming reaction layer 20 may be generally 10 to 200 g/L, and for example, 50 to 100 g/L per liter of the volume of the base material. By satisfying the above range, the effect of the art disclosed herein can be stably exerted in a long term at a high level. In the present specification, "coat quantity" refers to the mass of the solid content per unit volume (1 L) of the base material.

The catalyst layer 30 is a reaction field where the unbumt component in the exhaust gas is purified. The exhaust gas having entered the exhaust gas purifying catalyst 10 is in contact with the catalyst layer 30 while flowing in the flow channel (cell 12) of the exhaust gas purifying catalyst 10. Thus, the exhaust gas is purified. For example, HC or CO included in the exhaust gas is oxidized by the catalyst layer 30 and converted (purified) into water, carbon dioxide, and the like. NOx included in the exhaust gas is reduced by the catalyst layer 30 and converted (purified) into nitrogen.

As shown in Fig. 3, the catalyst layer 30 here is provided on a side farther from the base material 11 than the reforming reaction layer 20 in the thickness direction orthogonal to the cylinder axis direction X. The catalyst layer 30 is provided on a surface of the reforming reaction layer 20 so as to be in contact with the reforming reaction layer 20, specifically. However, the catalyst layer 30 may be provided on the base material 11, and for example, provided between the base material 11 and the reforming reaction layer 20 in the thickness direction.

The catalyst layer 30 may be provided along the cylinder axis direction X from the exhaust gas inlet 10a to the downstream side, and may be provided along the cylinder axis direction X from the exhaust gas outlet 10b to the upstream side. The catalyst layer 30 may be provided either continuously or intermittently on the reforming reaction layer 20. A total coat length (average length) L2 of the catalyst layer 30 in the cylinder axis direction X may be designed in consideration of, for example, the size of the base material 11, the flow rate of the exhaust gas flowing in the exhaust gas purifying catalyst 10, and the like. In some aspects, when the total length of the exhaust gas purifying catalyst 10 in the cylinder axis direction X is L, the coat length L2 of the catalyst layer 30 in the cylinder axis direction X satisfies 0.5L ≤ L2 ≤ L, preferably 0.8L ≤ L2, and for example, 0.9L ≤ L2. The total coat thickness of the catalyst layer 30 (average length in the thickness direction orthogonal to the cylinder axis direction X) may be generally 1 to 300 µm, and for example, about 5 to 100 µm.

The catalyst layer 30 in Fig. 3 includes a multilayer structure in which two catalyst coated layers with different structures are stacked in the thickness direction orthogonal to the cylinder axis direction X. That is, the catalyst layer 30 here includes a lower layer 31 formed on the surface of the reforming reaction layer 20 and an upper layer 32 formed on the lower layer 31. The lower layer 31 is one example of "first catalyst layer" disclosed herein, and the upper layer 32 is one example of "second catalyst layer" disclosed herein. The lower layer 31 and the upper layer 32 may be different from each other in length and thickness. The reforming reaction layer 20 may have a single layer structure. Note that, between the lower layer 31 and the upper layer 32, a third layer (intermediate layer) with different composition and properties may be provided additionally. The catalyst layer 30 may include the lower layer 31, one or two or more intermediate layers, and the upper layer 32. In another embodiment, the catalyst layer 30 may include a former stage part that is positioned on the upstream side in the cylinder axis direction X, and a latter stage part that is positioned on the downstream side relative to the former stage part and has different composition and properties from the former stage part.

Each of the lower layer 31 and the upper layer 32 includes the precious metal necessarily. The lower layer 31 and the upper layer 32 here further include a carrier material that carries the precious metal. As the carrier material, for example, the materials described above as the examples of the OSC material and the non-OSC material of the reforming reaction layer 20 can be used. Specific examples thereof include the Ce-containing oxides such as ceria and the CZ complex oxide, and the Al-containing oxides such as alumina.

The precious metal is a catalyst that purifies the unbumt component in the exhaust gas. The precious metal is not limited in particular, and one kind or two or more kinds among various metal species that have conventionally been employed in this type of applications and known as catalysts that can function as an oxidation catalyst or a reduction catalyst in the purification of the unbumt component can be used. Specific examples thereof include metals belonging to a platinum group (PGM), that is, rhodium (Rh), palladium (Pd), platinum (Pt), ruthenium (Ru), osmium (Os), and iridium (Ir), and precious metals other than the platinum group, that is, gold (Au) and silver (Ag). Although not particularly limited, the content of the precious metal in the catalyst layer 30 is typically less than the content of the hydrogen generation catalyst in the reforming reaction layer 20. The content of the precious metal may be generally 0.1 to 10 g/L, for example 0.5 to 5 g/L per liter of the volume of the base material.

In some aspects, the catalyst layer 30 includes an oxidation catalyst layer including an oxidation catalyst with high oxidation activity (for example, at least one of Pd and Pt), and a reduction catalyst layer including a reduction catalyst with high reduction activity (for example, Rh). In the present embodiment, the lower layer 31 and the upper layer 32 include different precious metals from each other. The lower layer 31 includes a first kind of the precious metal, and the upper layer 32 includes a second kind of the precious metal that is different from the first kind. Thus, sintering of the precious metal can be suppressed.

The lower layer 31 here is an oxidation catalyst layer including the oxidation catalyst (for example, at least one of Pd and Pt). On the other hand, the upper layer 32 is a reduction catalyst layer including Rh. The upper layer 32 here does not include the oxidation catalyst (for example, at least one of Pd and Pt). Since the lower layer 31 (oxidation catalyst layer) including the oxidation catalyst is in contact with the reforming reaction layer 20, the deterioration of the hydrogen generation catalyst can be suppressed and the activity can be highly maintained in a long term. Moreover, since the upper layer 32 containing Rh is provided at a position far from the reforming reaction layer 20, the oxidation of the reduction catalyst in the use of the hydrogen generation catalyst can be suppressed, and the activity can be highly maintained in a long-term. Additionally, in this structure, by using Hz generated by the hydrogen generation catalyst, NOx can be reduced and purified into N₂ and HzO, and the precious metal in the oxide state can be metalized.

The catalyst layer 30 may be formed by the precious metal and the carrier material, and further include an optional component. For example, the catalyst layer 30 may include metal species such as an alkali metal element, an alkaline-earth metal element, and a transition metal element in addition to the precious metal. For example, if the catalyst layer 30 includes the oxidation catalyst and the OSC material, the catalyst layer 30 preferably includes the above-described alkaline-earth element as the optional component of the reforming reaction layer 20. Moreover, the catalyst layer 30 may include a NOx adsorber with a NOx storage capacity, a stabilizer, or the like. Examples of the stabilizer include rare-earth elements such as yttrium (Y), lanthanum (La), and neodymium (Nd).

In some aspects, the coat quantity (molding quantity) of the catalyst layer 30 may be generally 10 to 500 g/L, and for example, 100 to 300 g/L per liter of the volume of the base material. By satisfying the above range, the purification performance for the unbumt component and the decrease of the pressure loss can be made balanced at a high level. Moreover, the durability and the peeling resistance can be improved.

### <<Manufacturing method for exhaust gas purifying catalyst 10>>

The exhaust gas purifying catalyst 10 can be manufactured by the following method, for example. That is to say, first, the base material 11, a slurry for reforming reaction layer formation that is used for forming the reforming reaction layer 20, a slurry for lower layer formation that is used for forming the lower layer 31, and a slurry for upper layer formation that is used for forming the upper layer 32 are prepared. The slurry for the reforming reaction layer formation contains the hydrogen generation catalyst (oxide) as a necessary raw material component, and may be prepared by dispersing other optional components such as the inorganic oxide (OSC material and/or non-OSC material), a binder, and various kinds of additives in a dispersant. Since the hydrogen generation catalyst is used in a mode of the oxide, the hydrogen generation catalyst can be contained in the reforming reaction layer 20 in a state where the hydrogen generation catalyst is not carried by the OSC material or the non-OSC material and is independent from the OSC material or the non-OSC material. Examples of the binder include alumina sol and silica sol. Examples of the dispersant include water and an aqueous solvent. The slurry for the lower layer formation and the slurry for the upper layer formation contain a precious metal source (for example, solution with the precious metal as ions) as a necessary raw material component, and may be prepared by dispersing other optional components such as the carrier material, the binder, and various kinds of additives in the dispersant.

The reforming reaction layer 20 and the catalyst layer 30 (lower layer 31 and upper layer 32) can be formed by a conventional method, for example, an impregnation method, a wash-coating method, or the like. In one example, first, the prepared slurry for the reforming reaction layer formation as described above is poured into the cells 12 from an end part of the base material 11 and supplied to a predetermined length along the cylinder axis direction X. The slurry may be poured from either the inlet 10a or the outlet 10b. In this case, the superfluous slurry may be absorbed from an end part on the opposite side. Alternatively, the superfluous slurry may be discharged from the cells 12 by sending air from the end part on the opposite side, for example. Next, the base material 11 to which the slurry has been supplied is sintered at a predetermined temperature for a predetermined length of time. A sintering method may be similar to the conventional one. Thus, the raw material components are sintered to the base material 11 and the reforming reaction layer 20 can be formed. The catalyst layer 30 can also be formed in a similar method. As described above, the exhaust gas purifying catalyst 10 can be manufactured.

### <<Application of exhaust gas purifying catalyst 10>>

The exhaust gas purifying catalyst 10 can be used suitably for purifying the exhaust gas emitted from the internal-combustion engines of, in addition to vehicles such as an automobile and a truck, a motorcycle, and a bicycle with a motor, marine products such as a vessel, a tanker, a water bike, a personal watercraft, and an outboard motor, garden products such as a mowing machine, a chain saw, and a trimmer, leisure products such as a golf cart and a four-wheeled buggy, generator sets such as a cogeneration system, an incinerator, and the like. Especially, the exhaust gas purifying catalyst 10 can be used suitably for vehicles such as an automobile. In particular, the exhaust gas purifying catalyst that achieves both the NOx purification performance in the lean atmosphere and the excellent low-temperature activity can be used suitably for eco-friendly cars that include an energy-saving mechanism in which the engine is frequently started and stopped repeatedly when the vehicle is driving or stops to wait for traffic lights, for example.

Although Test Examples of the present invention will be described below, the present invention is not intended to be limited to these Test Examples.

### [Test Example 1] Examination 1 of kind of hydrogen generation catalyst

### (Example 1)

First, a honeycomb base material with a cylindrical shape (made of cordierite, capacity of base material: 1.3 L, total length of base material: 110 mm) was prepared. Next, the following three kinds of slurries were prepared.

Slurry for reforming reaction layer formation: the ceria-zirconia complex oxide, alumina, the hydrogen generation catalyst, and water were mixed to prepare the slurry for the reforming reaction layer formation in which the ceria-zirconia complex oxide as the OSC material was contained by 35 g/L (with ceria contained by 17.5 g/L therein), alumina as the non-OSC material was contained by 20 g/L, and praseodymium oxide (Pr₆O₁₁) as the hydrogen generation catalyst was contained by 10 g/L.

Pd slurry for lower layer formation: the ceria-zirconia complex oxide, alumina, Pd nitrate, and water were mixed to prepare a Pd slurry in which the ceria-zirconia complex oxide was contained by 50 g/L (with ceria contained by 20 g/L therein), alumina was contained by 50 g/L, barium oxide was contained by 5 g/L, and Pd as the precious metal was contained by 3 g/L.

Rh slurry for upper layer formation: the ceria-zirconia complex oxide, alumina, Rh nitrate, and water were mixed to prepare an Rh slurry in which the ceria-zirconia complex oxide was contained by 10 g/L (with ceria contained by 2 g/L therein), alumina was contained by 70 g/L, and Rh as the precious metal was contained by 0.4 g/L.

Next, the slurry for the reforming reaction layer formation was supplied to the above-described honeycomb base material, and a part that corresponds to 80% of the total length of the base material from the end part on the exhaust gas inflow side was wash-coated with the material. Then, drying by heat was performed at 250°C in a drying machine for one hour to evaporate water, which was followed by one-hour sintering at 500°C in an electric furnace. Thus, the reforming reaction layer was formed on a surface of the base material.

Next, on the reforming reaction layer, the catalyst layer with a structure of two, upper and lower, layers was formed. Specifically, first, the Pd slurry was supplied to the base material on which the above-described reforming reaction layer was formed, and a part that corresponds to 100% of the total length of the base material from the end part on the exhaust gas inflow side toward the downstream side, and from the end part on the exhaust gas outflow side toward the upstream side was wash-coated with the material. Then, drying by heat was performed at 250°C in the drying machine for one hour to evaporate water, which was followed by one-hour sintering at 500°C in the electric furnace. Thus, the lower layer was formed on the surface of the reforming reaction layer. Next, the Rh slurry was supplied to the base material on which the above-described lower layer was formed, and the part that corresponds to 100% of the total length of the base material from the end part on the exhaust gas inflow side toward the downstream side, and from the end part on the exhaust gas outflow side toward the upstream side was wash-coated with the material. Then, drying by heat was performed at 250°C in the drying machine for one hour to evaporate water, which was followed by one-hour sintering at 500°C in the electric furnace. Thus, the upper layer was formed on a surface of the lower layer.

As described above, an exhaust gas purifying catalyst in Example 1 was manufactured.

### (Example 2)

In Example 2, an exhaust gas purifying catalyst was manufactured in a manner similar to Example 1 except that neodymium oxide (Nd₂O₃) was used as the hydrogen generation catalyst when the slurry for the reforming reaction layer formation was prepared.

### (Comparative Example 1)

In Comparative Example 1, an exhaust gas purifying catalyst was manufactured in a manner similar to Example 1 except that the reforming reaction layer was not formed on the base material, that is, only the catalyst layer with the structure of the two, upper and lower, layers was formed on the base material using the Pd slurry for the lower layer formation and the Rh slurry for the upper layer formation.

### [Evaluation of NOx purification performance]

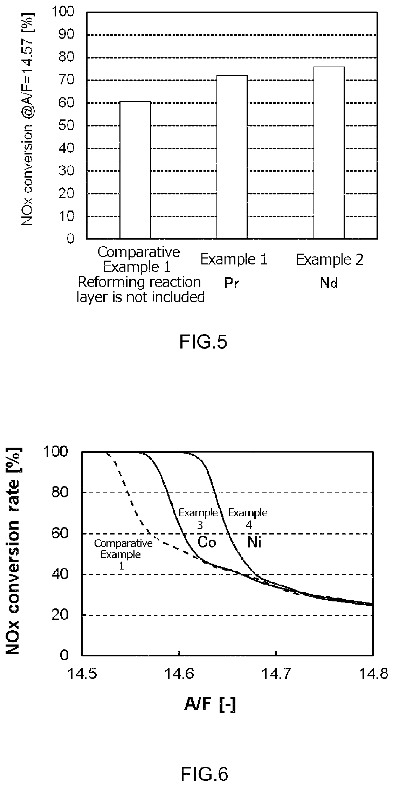

The NOx purification performance of the exhaust gas purifying catalyst in each Example was evaluated using a catalyst evaluation apparatus including a gasoline engine. Specifically, the exhaust gas purifying catalyst in each Example was set in the catalyst evaluation apparatus, and simulated exhaust gas with the air-fuel ratio (A/F) varied was supplied to the engine. On the basis of the ratio between the NOx concentration of the inflow gas to the exhaust gas purifying catalyst and the NOx concentration of the outflow gas from the exhaust gas purifying catalyst, the NOx purification rate was measured. The results are shown in Fig. 4. A graph in Fig. 5 shows the comparison of the NOx purification rates in the lean atmosphere (A/F = 14.57).

As shown in Fig. 4 and Fig. 5, in the lean atmosphere, the NOx purification performance of the exhaust gas purifying catalysts in Example 1 and Example 2 that included the reforming reaction layer containing 5 g/L or more of the rare earth oxide as the hydrogen generation catalyst was relatively higher than that of the exhaust gas purifying catalyst in Comparative Example 1 that did not include the reforming reaction layer. It is considered this is because of the combined effect from the facts that the unbumt component (for example, HC or CO) in the exhaust gas is converted into hydrogen molecules (H₂) with the high reactivity in the reforming reaction layer and the oxidation reaction speed of the exhaust gas improves, and the conflict with the purification reaction of the exhaust gas by the oxidation catalyst can be avoided since the reforming reaction layer does not include the oxidation catalyst.

### [Test Example 2] Examination 2 of kind of hydrogen generation catalyst

### (Example 3)

In Example 3, an exhaust gas purifying catalyst was manufactured in a manner similar to Example 1 except that cobalt oxide (CoO) was used as the hydrogen generation catalyst when the slurry for the reforming reaction layer formation was prepared.

### (Example 4)

In Example 4, an exhaust gas purifying catalyst was manufactured in a manner similar to Example 1 except that nickel oxide (NiO) was used as the hydrogen generation catalyst when the slurry for the reforming reaction layer formation was prepared.

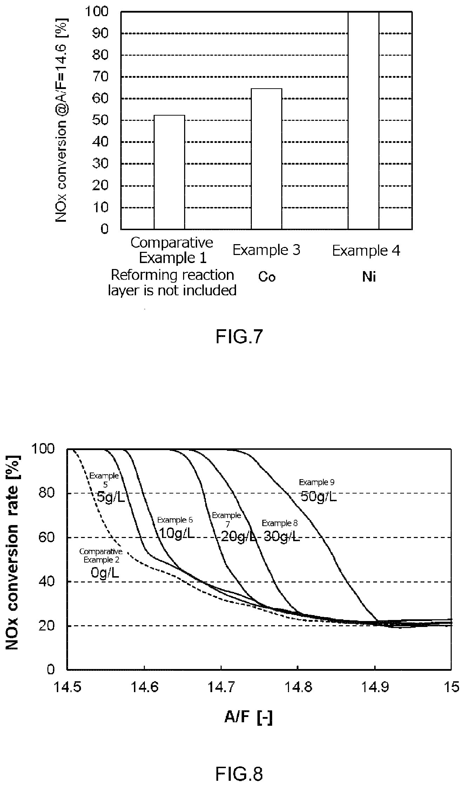

Then, the NOx purification rate was measured in a manner similar to Test Example 1. The results are shown in Fig. 6 in addition to the result of Comparative Example 1 in which the reforming reaction layer was not provided. A graph in Fig. 7 shows the comparison of the NOx purification rates in the lean atmosphere (A/F = 14.6).

As shown in Fig. 6 and Fig. 7, in the lean atmosphere, the NOx purification performance of the exhaust gas purifying catalysts in Example 3 and Example 4 that included the reforming reaction layer containing 5 g/L or more of the transition metal oxide as the hydrogen generation catalyst was relatively higher than that of the exhaust gas purifying catalyst in Comparative Example 1 that did not include the reforming reaction layer. Specifically, in Example 4 in which the nickel oxide was used (nickel was used as active species), the NOx purification rate was more than 99.9% and the NOx purification performance in the lean atmosphere was remarkably high.

### [Test Example 3] Examination of content of hydrogen generation catalyst

### (Examples 5 to 9, Comparative Example 2)

In Examples 5 to 9, exhaust gas purifying catalysts were manufactured in a manner similar to Example 4 except that, when the slurry for the reforming reaction layer formation was prepared, the contents of nickel oxide (NiO) as the hydrogen generation catalyst and alumina as the non-OSC material were changed as shown in Table 1 and the OSC material was not included.

**[Table 1]**

| | Reforming reaction layer | | | |
|---|---|---|---|---|
| | Hydrogen generation catalyst | | OSC material | Alumina |
| | Kind | Content [g/L] | Content [g/L] | Content [g/L] |
| Comparative Example 2 | - | 0 | 0 | 0 |
| Example 5 | Nickel oxide (NiO) | 5 | 0 | 10 |
| Example 6 | Nickel oxide (NiO) | 10 | 0 | 6 |
| Example 7 | Nickel oxide (NiO) | 20 | 0 | 12 |
| Example 8 | Nickel oxide (NiO) | 30 | 0 | 18 |
| Example 9 | Nickel oxide (NiO) | 50 | 0 | 30 |

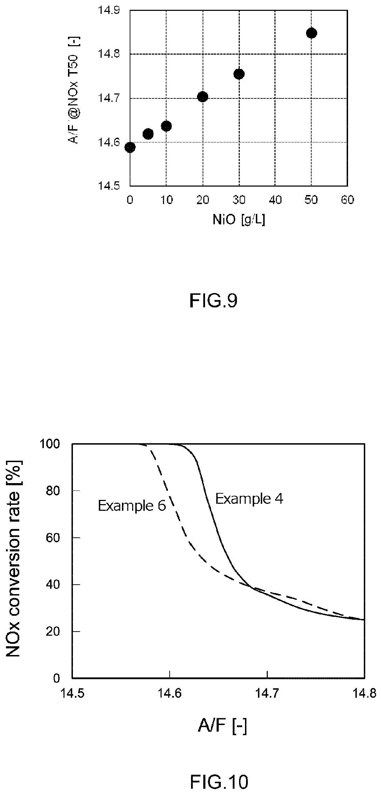

Then, the NOx purification rate was measured in a manner similar to Test Example 1. The results are shown in Fig. 8. A graph in Fig. 9 shows the comparison of the content of the nickel oxide and the A/F ofNOx T50.

As shown in Fig. 8 and Fig. 9, when the content of the hydrogen generation catalyst (nickel oxide) was increased, the NOx purification performance in the lean atmosphere was improved. Specifically, it has been found out that when the hydrogen generation catalyst (nickel oxide) is contained by 10 g/L or more, a stoichiometric operation range can be largely expanded.

A graph in Fig. 10 shows the comparison of the result of Example 6 in which the OSC material was not included and the result of Example 4 in which the OSC material was included. As shown in Fig. 10, in Example 4 in which the OSC material was included, the NOx purification performance in the lean atmosphere was improved compared with Example 6 in which the OSC material was not included. It is considered this is because of the effect from the fact that the OSC material functions as the promoter and the hydrogen generation reaction (the steam reforming reaction and/or the CO shift reaction) is promoted.

### [Evaluation of low-temperature activity]

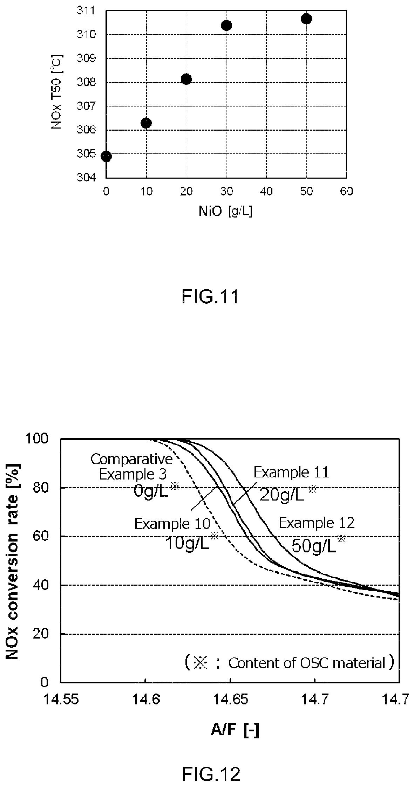

The exhaust gas purifying catalyst in each Example was attached to an exhaust system of a V type 8-cylinder gasoline engine (displacement: 4600 cc). The durability test was performed in a manner that the engine was operated at an average engine speed of 3000 rpm, and the simulated exhaust gases in the stoichiometric state and in the lean atmosphere were alternately circulated to the exhaust gas purifying catalyst for each predetermined time for 45 hours at a catalyst inlet gas temperature of 850°C. After the durability test, the catalyst inlet gas temperature was increased from room temperature (25°C) to 500°C at a temperature rising rate of 20°C/min while supplying the simulated exhaust gas with an A/F of 14.6. On the basis of the ratio between the NOx concentration of the inflow gas to the exhaust gas purifying catalyst and the NOx concentration of the outflow gas from the exhaust gas purifying catalyst, the NOx purification rate was measured. Then, the temperature at which the NOx purification rate became 50% (NOx T50) was obtained. A graph in Fig. 11 shows the content of the nickel oxide and NOx T50. Note that as the numeral of NOx T50 is smaller, the low-temperature activity (NOx purification performance at low temperature) is better.

As shown in Fig. 11, when the content of the hydrogen generation catalyst (nickel oxide) was increased, NOx T50 became higher and the low-temperature activity deteriorated. Thus, from the viewpoints of achieving both the NOx purification performance in the lean atmosphere and the excellent low-temperature activity, it has been found out that the content of the hydrogen generation catalyst is preferably 30 g/L or less and more preferably 20 g/L or less.

### [Test Example 4] Examination of content of OSC material

### (Examples 10 to 12, Comparative Example 3)

In Examples 10 to 12 and Comparative Example 3, exhaust gas purifying catalysts were manufactured in a manner similar to Example 4 except that, when the slurry for the reforming reaction layer formation was prepared, the contents of nickel oxide (NiO) as the hydrogen generation catalyst, the ceria-zirconia complex oxide as the OSC material, and alumina as the non-OSC material were changed as shown in Table 2.

**[Table 2]**

| | Reforming reaction layer | | | |
|---|---|---|---|---|
| | Hydrogen generation catalyst | | OSC material | Alumina |
| | Kind | Content [g/L] | Content [g/L] | Content [g/L] |
| Comparative Example 3 | Nickel oxide (NiO) | 10 | 0 | 55 |
| Example 10 | Nickel oxide (NiO) | 10 | 10 | 45 |
| Example 11 | Nickel oxide (NiO) | 10 | 20 | 35 |
| Example 12 | Nickel oxide (NiO) | 10 | 50 | 28 |

Then, the NOx purification rate was measured in a manner similar to Test Example 1. The results are shown in Fig. 12. A graph in Fig. 13 shows the comparison of the NOx purification rates in the lean atmosphere (A/F = 14.65). Note that the horizontal axis in Fig. 13 also shows the ratio of the content of the OSC material to the content of the hydrogen generation catalyst.

As shown in Fig. 12 and Fig. 13, when the ratio of the content of the OSC material to the content of the hydrogen generation catalyst was increased, the NOx purification performance in the lean atmosphere was improved. It is considered this is because of the combined effect from the facts that the OSC material functions as the promoter and the hydrogen generation reaction is promoted, and the OSC material functions as the absorber that stores oxygen.

### [Test Example 5] Examination 3 of kind of hydrogen generation catalyst

Next, the reforming reaction layer in which any metal belonging to the platinum group (PGM), specifically, palladium (Pd), platinum (Pt), rhodium (Rh), or ruthenium (Ru) was added in addition to nickel oxide as the hydrogen generation catalyst was manufactured and the performance was evaluated.

### (Example 13)

A honeycomb base material with a cylindrical shape (made of cordierite, capacity of base material: 1.3 L, total length of base material: 110 mm), which was similar to the honeycomb base material used in the above-described Test Example, was prepared. Additionally, the following three kinds of slurries were prepared.

Slurry for Pd-containing reforming reaction layer formation: the ceria-zirconia complex oxide (CZ complex oxide), alumina, nickel oxide (NiO), palladium nitrate, and water were mixed each by a suitable quantity to prepare a slurry for Pd-containing reforming reaction layer formation.

Pd slurry for lower layer formation: the ceria-zirconia complex oxide, alumina, barium oxide, palladium nitrate, and water were mixed each by a suitable quantity to prepare a Pd slurry.

Rh slurry for upper layer formation: the ceria-zirconia complex oxide, alumina, rhodium nitrate, and water were mixed each by a suitable quantity to prepare an Rh slurry.

Next, the slurry for the Pd-containing reforming reaction layer formation was supplied to the above-described honeycomb base material, and the part that corresponds to 80% of the total length of the base material from the end part on the exhaust gas inflow side was wash-coated with the material. Then, drying by heat was performed at 250°C in the drying machine for one hour to evaporate water, which was followed by one-hour sintering at 500°C in the electric furnace. Thus, the Pd-containing reforming reaction layer was formed on the surface of the base material.

Next, on the Pd-containing reforming reaction layer, the catalyst layer with the structure of the two, upper and lower, layers (the lower layer was a Pd layer and the upper layer was an Rh layer) was formed in a process similar to that in Example 1.

As described above, an exhaust gas purifying catalyst in Example 13 was manufactured. The content of each component per liter of the catalyst body is as follows.

### <Pd-containing reforming reaction layer>

| | |
|---|---|
| Nickel oxide | 10 g/L-cat |
| Pd | 0.275 g/L-cat |
| CZ complex oxide | 35 g/L-cat (with ceria contained by 17.5 g/L-cat therein) |
| Alumina | 20 g/L-cat |

### <Catalyst layer lower layer>

| | |
|---|---|
| Pd | 3 g/L-cat |
| CZ complex oxide | 50 g/L-cat (with ceria contained by 20 g/L-cat therein) |
| Alumina | 50 g/L-cat |
| Ba (in terms of oxide) | 5 g/L-cat |

### <Catalyst layer upper layer>

| | |
|---|---|
| Rh | 0.4 g/L-cat |
| CZ | complex oxide 10 g/L-cat (with ceria contained by 2 g/L-cat therein) |
| Alumina | 70 g/L-cat |

### (Example 14)

In Example 14, a slurry for Pt-containing reforming reaction layer formation was prepared in a manner similar to Example 13 except that a dinitrodiammine platinum nitrate solution was used instead of palladium nitrate described above. Then, the slurry for the Pt-containing reforming reaction layer formation, and the Pd slurry for the catalyst layer lower layer formation and the Rh slurry for the catalyst layer upper layer formation that were the same as those in Example 13 were used to manufacture an exhaust gas purifying catalyst in Example 14. The content of each component per liter of the catalyst body is as follows.

### <Pt-containing reforming reaction layer>

| | |
|---|---|
| Nickel oxide | 10 g/L-cat |
| Pt | 0.275 g/L-cat |
| CZ complex oxide | 35 g/L-cat (with ceria contained by 17.5 g/L-cat therein) |
| Alumina | 20 g/L-cat |

### <Catalyst layer lower layer> and <catalyst layer upper layer> are the same as those in Example 13.

### (Example 15)

In Example 15, a slurry for Rh-containing reforming reaction layer formation was prepared in a manner similar to Example 13 except that rhodium nitrate was used instead of palladium nitrate described above. Then, the slurry for the Rh-containing reforming reaction layer formation, and the Pd slurry for the catalyst layer lower layer formation and the Rh slurry for the catalyst layer upper layer formation that were the same as those in Example 13 were used to manufacture an exhaust gas purifying catalyst in Example 15. The content of each component per liter of the catalyst body is as follows.

### <Rh-containing reforming reaction layer>

| | |
|---|---|
| Nickel oxide | 10 g/L-cat |
| Rh | 0.275 g/L-cat |
| CZ complex oxide | 35 g/L-cat (with ceria contained by 17.5 g/L-cat therein) |
| Alumina | 20 g/L-cat |

### <Catalyst layer lower layer> and <catalyst layer upper layer> are the same as those in Example 13.

### (Example 16)

In Example 16, a slurry for Ru-containing reforming reaction layer formation was prepared in a manner similar to Example 13 except that ruthenium nitrate was used instead of palladium nitrate described above. Then, the slurry for the Ru-containing reforming reaction layer formation, and the Pd slurry for the catalyst layer lower layer formation and the Rh slurry for the catalyst layer upper layer formation that were the same as those in Example 13 were used to manufacture an exhaust gas purifying catalyst in Example 16. The content of each component per liter of the catalyst body is as follows.

### <Ru-containing reforming reaction layer>

| | |
|---|---|
| Nickel oxide | 10 g/L-cat |
| Ru | 0.275 g/L-cat |
| CZ complex oxide | 35 g/L-cat (with ceria contained by 17.5 g/L-cat therein) |
| Alumina | 20 g/L-cat |

### <Catalyst layer lower layer> and <catalyst layer upper layer> are the same as those in Example 13.

Table 3 shows structures of the reforming reaction layers of the exhaust gas purifying catalysts in Example 13 to Example 16 that were prepared as described above.

**[Table 3]**

| | Reforming reaction layer | | | | | |
|---|---|---|---|---|---|---|
| | Hydrogen generation catalyst | | Added PGM | | OSC material | Alumina |
| | Kind | Content [g/L] | Kind | Content [g/L] | Content [g/L] | Content [g/L] |
| Example 4 | Nickel oxide (NiO) | 10 | Not added | 0 | 35 | 20 |
| Example 13 | Nickel oxide (NiO) | 10 | Pd | 0.275 | ↑ | ↑ |
| Example 14 | ↑ | 10 | Pt | 0.275 | ↑ | ↑ |
| Example 15 | ↑ | 10 | Rh | 0.275 | ↑ | ↑ |
| Example 16 | ↑ | 10 | Ru | 0.275 | ↑ | ↑ |

### [Evaluation of NOx purification performance]

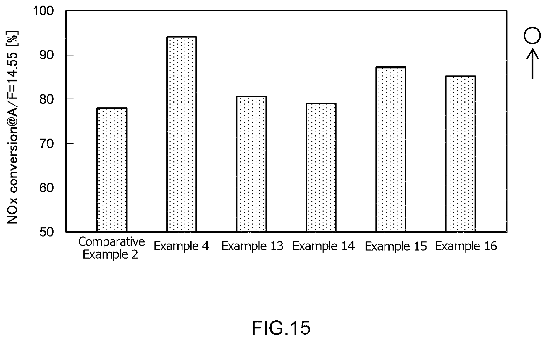

Next, in a manner similar to Test Example 1, the durability test was performed and then the NOx purification rate was measured using the obtained exhaust gas purifying catalysts in Example 13 to Example 16, the exhaust gas purifying catalyst in Example 4 as described above (that is, the reforming reaction layer did not include PGM, see Table 3), and the exhaust gas purifying catalyst in Comparative Example 2 (that is, the reforming reaction layer was not provided, see Table 1). Fig. 15 shows the result of comparing the NOx purification rates at an A/F of 14.6

As shown in Fig. 15, in the above condition, the NOx purification rate of the exhaust gas purifying catalyst in Example 4 was the highest and 94.1%. Next, the NOx purification rates of the exhaust gas purifying catalyst in Example 15 and the exhaust gas purifying catalyst in Example 16 were 87.2% and 85.2%, respectively, and the favorable NOx purification rate was maintained even in the case where Rh or Ru was added to the reforming reaction layer.

On the other hand, the NOx purification rates of the exhaust gas purifying catalyst in Example 13 and the exhaust gas purifying catalyst in Example 14 were 80.6% and 79.1%, respectively, and the NOx purification rate in the case where Pd or Pt was added to the reforming reaction layer was less than that in the case where Rh or Ru was added to the reforming reaction layer. However, the NOx purification rates of the exhaust gas purifying catalyst in Example 13 and the exhaust gas purifying catalyst in Example 14 were higher than the NOx purification rate (78.0%) of the exhaust gas purifying catalyst in Comparative Example 2 in which the reforming reaction layer was not provided.

It is considered this is because of the fact that if PGM is added to the reforming reaction layer, competitive adsorption with the hydrogen generation catalyst (here, nickel oxide) occurs and the reforming reaction is suppressed. When the Rh or Ru as PGM is added, however, the suppression of a certain degree is not observed and an advantageous effect can be obtained compared with Comparative Example in which the reforming reaction layer is not provided. It is assumed that when Rh or Ru is added, these PGMs can cause the reforming reaction similarly to nickel.

Alternatively, by adding these PGMs, the reforming reaction layer can have a function as a so-called three-way catalyst.

Although the embodiments of the present invention have been described above, each of the above-described embodiments is merely one example. The present invention can be carried out in other various modes. The present invention can be carried out based on the contents disclosed in this specification and technical common sense in the field. The techniques described in the scope of claims include those in which the specific embodiments exemplified above are variously modified and changed. For example, a part of the aforementioned embodiment can be replaced by another modified aspect, and the other modified aspect can be added to the aforementioned embodiment. Additionally, the technical feature may be deleted as appropriate unless such a feature is described as an essential element.

For example, the above-described exhaust gas purifying catalyst 10 includes the reforming reaction layer 20 on the base material 11, and the catalyst layer 30 on the reforming reaction layer 20. However, the structure is not limited to this example. In another embodiment, for example, the exhaust gas purifying catalyst may include the catalyst layer 30 on the base material 11, and the reforming reaction layer 20 on the catalyst layer 30. Alternatively, the reforming reaction layer 20 and the catalyst layer 30 may not be stacked in the thickness direction, and may be arranged in the cylinder axis direction X. For example, the reforming reaction layer 20 and the catalyst layer 30 may be sectioned and provided on the upstream side and the downstream side in the cylinder axis direction X. Moreover, the reforming reaction layer 20 and the catalyst layer 30 may be provided on different base materials.

## Claims

1. An exhaust gas purifying catalyst that is disposed in an exhaust path of an internal-combustion engine and purifies an unbumt component in exhaust gas emitted from the internal-combustion engine, comprising:
a base material;
a reforming reaction layer provided on the base material and including at least one of a rare earth oxide and a transition metal oxide (except precious metal other than Rh and Ru) as a hydrogen generation catalyst that converts the unbumt component in the exhaust gas into H₂; and
a catalyst layer including precious metal that purifies the unbumt component, wherein a content of the hydrogen generation catalyst in the reforming reaction layer is 5 g/L or more per unit volume of the base material.

2. The exhaust gas purifying catalyst according to claim 1, wherein the reforming reaction layer further includes an OSC material with an oxygen storage capacity.

3. The exhaust gas purifying catalyst according to claim 2, wherein in the reforming reaction layer, a ratio of a content of the OSC material to the content of the hydrogen generation catalyst is 0.5 to 10.

4. The exhaust gas purifying catalyst according to any one of claims 1 to 3, wherein the content of the hydrogen generation catalyst is 20 g/L or less.

5. The exhaust gas purifying catalyst according to any one of claims 1 to 4, wherein the hydrogen generation catalyst includes at least one of Pr, Nd, Co, and Ni.

6. The exhaust gas purifying catalyst according to any one of claims 1 to 5, wherein the reforming reaction layer does not include the precious metal.

7. The exhaust gas purifying catalyst according to any one of claims 1 to 6, wherein the catalyst layer is provided on the reforming reaction layer.

8. The exhaust gas purifying catalyst according to any one of claims 1 to 7, wherein the catalyst layer includes a first catalyst layer that includes an oxidation catalyst as the precious metal, and a second catalyst layer that is provided on the first catalyst layer and includes Rh as the precious metal.
